# EUROPÄISCHE PATENTSCHRIFT

(11) **EP 1 981 997 B1**
(45) Veröffentlichungstag und Bekanntmachung des Hinweises auf die Patenterteilung: **23.04.2014**
(21) Anmeldenummer: 07703059.1
(22) Anmeldetag: 26.01.2007
(51) Int. Cl.: C13B 20/02, C13B 20/04, C13B 20/06

(54) **ROHSAFTREINIGUNG MIT REDUZIERTEM KALKVERBRAUCH**
PURIFICATION OF RAW JUICE FEATURING REDUCED LIME CONSUMPTION
ÉPURATION DE JUS BRUT À CONSOMMATION RÉDUITE DE CHAUX

(30) Priorität: 28.01.2006 DE 102006004103
(43) Veröffentlichungstag der Anmeldung: 22.10.2008
(73) Patentinhaber: Südzucker AG Mannheim/Ochsenfurt, 68165 Mannheim (DE)
(72) Erfinder: AJDARI RAD, Mohsen, 67283 Obrigheim (DE); FRENZEL, Stefan, 69469 Weinheim (DE); SHAHIDIZENOUZ, Azar, 67283 Obrigheim (DE)
(74) Vertreter: Schwahn, Hartmut
(86) Internationale Anmeldenummer: PCT/EP2007/000671
(87) Internationale Veröffentlichungsnummer: WO 2007/085466

(56) Entgegenhaltungen:
- US-A- 3 089 789
- US-A- 4 795 494
- US-A- 5 480 490
- FROMMELT B: "Experiences of juice purification in beet sugar factories. A comparison of Klein Wanzleben, Germany, and Moorhead, USA." INTERNATIONAL SUGAR JOURNAL, Bd. 99, Nr. 1183, 1997, Seite 328, XP009083646

## Beschreibung

Die vorliegende Erfindung betrifft ein verbessertes Verfahren zur Reinigung von Zuckerrüben-Rohsaft, welcher vor allem durch Extraktion von Zuckerrüben erhalten wird. Die vorliegende Erfindung betrifft weiter Verfahren zur Herstellung von Nichtsaccharosestoff-Zusammensetzungen aus Zuckerrüben-Rohsaft sowie Vorrichtungen zur Reinigung von Zuckerrüben-Rohsaft. Die erfindungsgemäßen Maßnahmen erlauben eine Reduzierung des Kalkverbrauches bei der Reinigung.

Herkömmlicherweise wird Zucker aus Rüben (Zuckerrüben, *Beta vulgaris*) gewonnen, indem die geernteten Rüben zunächst von einem Großteil der noch anhaftenden Erde sowie von Blattresten befreit werden. Anschließend werden die Rüben gewaschen und mittels Schneidemaschinen zu meist bleistiftstarken Schnitzeln gehobelt. Die Zuckergewinnung aus den Schnitzeln erfolgt dann in der Regel durch die Extraktion der Rübenschnitzel in heißem Extraktionswasser. In der Regel wird eine Gegenstrom-Extraktion in einem Extraktionsturm durchgeführt. Durch Ansäuern des Extraktionswassers wird die anschließende Filtration des erhaltenen Zuckerrüben-Rohsaftes sowie die Abpressbarkeit der extrahierten Schnitzel begünstigt.

Der bei der Extraktion gewonnene Zuckerrüben-Rohsaft wird anschließend einer Reinigungsstufe, die als Extraktreinigung bezeichnet wird, zugeführt. Die geschieht vor allem, um im Rohsaft enthaltene Verunreinigungen, die als Nichtsaccharosestoffe bezeichnet werden, zu entfernen. Die Gegenwart von Nichtsaccharosestoffen verschlechtern das Produktionsergebnis, das heißt die aus dem Rohsaft nach Eindicken des Rohsafts und anschließende Kristallisation gewonnene kristalline Saccharose beziehungsweise der Saccharosesirup.

Üblicherweise erfolgt die Extraktreinigung durch die so genannte Kalk-Kohlensäure-Extraktreinigung. Diese enthält die Verfahrensschritte Vorkalkung und Hauptkalkung. Anschließend findet eine erste und gegebenenfalls eine zweite Carbonatation statt, wobei mittels Filtration der bei der Carbonatation entstehende Niederschlag vom gektärten Rohsaft abgetrennt wird. Idealerweise werden bei der Vor und Hauptkalkung die im Zuckerrüben-Rohsaft enthaltenen Nichtsaccharosestoffe nur so weit abgebaut und gespalten, dass sie sich noch mittels zweckmäßiger Trennmethoden abtrennen lassen. Werden die Nichtsaccharosestoffe aber zu niedermolekularen Verbindungen abgebaut und können diese nicht mehr vollständig aus dem Rohsaft entfernt werden, wird das Endprodukt verschlechtert.

In der bekannten Vorkalkung wird der Zuckerrüben-Rohsaft unter schonenden Bedingungen schrittweise durch Zugabe von Calciumhydroxid-Lösung, der so genannten Kalkmilch, alkalisiert. Dabei wir der pH-Wert des Zuckerrüben-Rohsaftes im Vorkalkungsreaktor stufenweise auf etwa pH 11,5 angehoben. Eine bekannte Vonkalkung erfolgt unter Zugabe von Kalkmilch, bis eine Konzentration von etwa 0,1 bis 0,3 g Calciumhydroxid pro 100 ml Zuckerrüben-Rohsaft (g CaO/100 ml) erreicht wird. Infolge der Alkalisierung des Rohsaftes kommt es zu einer Neutralisierung der im Extrakt vorhandenen organischen und anorganischen Säuren. Dabei werden Anionen, die mit dem Calcium unlösliche oder schwerlösliche Salze bilden, beispielsweise Phosphat, Oxalat, Citrat und Sulfat, weitestgehend ausgefällt. Darüber hinaus koagulieren auch Proteine sowie kolloidal gelöste Nichtsaccharosestoffe wie Pektin und Eiweißstoffe. Die Ausfällung der Nichtsaccharosestoffe erfolgt innerhalb bestimmter pH-Bereiche, die bei der progressiven Alkalisierung durchlaufen werden. Dabei findet auch eine Zusammenballung oder Verdichtung des erhaltenen Niederschlags statt, der dann leichter entfernt werden kann.

Die anschließend durchgeführte Hauptkalkung führt vor allem zum chemischen Abbau von Invertzucker und im Rohsaft enthaltenen Säureamiden wie Glutamin. Diese Komponenten müssen in einer frühen Phase der Saccharosegewinnung abgetrennt oder abgebaut werden. Andernfalls kann es bei der nachfolgenden Safteindickung zur nachteiligen Bildung von Säuren kommen. In der bekannten Hauptkalkung wird die Temperatur auf etwa 85 °C angehoben. Die Alkalität des Rohsaftes wird durch weitere Zugabe von Kalkmilch nochmals erhöht, sodass eine Konzentration von etwa 0,8 bis 1,1 g CaO/100 ml erreicht wird.

Um die Verweilzeit in der Hauptkalkung in einem anwendungstechnisch vertretbaren Rahmen von in der Regel weniger als 40 Minuten zu halten, können die mit der Hauptkalkung verfolgten Ziele können in bekannten Verfahren nur bei den vorgenannten Extrembedingungen, das heißt hohe Temperatur und hohe Alkalität, erreicht werden.

Der im Hauptkalkungsprozess nicht verbrauchte Kalk wird durch Einleiten von Kohlenstoffdioxid als so genanntes Carbonatationsgas im Schritt der Carbonatation zu Calciumcarbonat umgesetzt. Calciumcarbonat ist eine starkes Adsorptionsmittel für eine Reihe löslicher Nichtsaccharosestoffe. Calciumcarbonat dient somit auch als Filtrierungshilfsmittel. Allerdings führt der in bekannten Verfahren entstehende Anteil an Calciumcarbonat zu einem Zusetzen der der Carbonatation nachgeschalteten Filter, was deren Standzeit verringert.

Aufgrund des hohen Kalkaufkommens bei der Hauptkalkung muss in der Carbonatation auch entsprechend viel Kohlenstoffdioxid zur Neutralisierung eingesetzt werden. Sowohl Kohlenstoffdioxid als auch der ungelöschte Kalk für die Herstellung der Kalkmilch wird in der Regel in Koksöfen gewonnen, worin Steinkohle (Koks) zusammen mit Kalkstein verbrannt wird. Dabei lässt sich nicht vermeiden, dass in den Koksöfen und bei der Carbonatation Kohlenstoffdioxidgas in Umgebung entweicht.

Die über die Filter in der ersten und zweiten Carbonatationsstufe aufkonzentrierten Calciumcarbonatschlämme (so genannte Schlammsaftkonzentrate) werden üblicherweise vereinigt und über Membranfilterpressen abgepresst. Dabei entsteht der so genannte Carbokalk. Dieser Carbokalk ist ein lagerfähiges Produkt mit einem Trockensubstanzgehalt von in der Regel mehr als 70 % und kann teilweise als Düngemittel eingesetzt werden. Üblicherweise wird ein Teil des Schlammsaftkonzentrats zur Vorkalkung zurückgeführt.

Der in der Extraktreinigung gereinigte Rohsaft, der auch als Dünnsaft bezeichnet wird, enthält etwa 15 bis 17 % Saccharose. Er wird anschließend durch Wasserentzug zu einem Dicksaft mit einem Saccharosegehalt von etwa 65 bis 70 % eingedickt und dann in Kristallisatoren solange weiter eingedickt bis sich eine zähe Masse, die so genannte Kochmasse, mit etwa 85 % Saccharose bildet. Durch Abzentrifugieren der Melasse, wird schließlich kristalliner Weißzucker erhalten, der anschließend gegebenenfalls raffiniert werden kann. Ein Nachteil der herkömmlichen Kalk-Kohlensäure-Extraktreinigung besteht vor allem darin, dass ein zu geringer Reinigungseffekt erreicht wird, da nur etwa maximal 40 % aller Nichtsaccharosestoffe aus dem Zuckerrüben-Rohsaft entfernt werden können.

Ein weiterer Nachteil besteht darin, dass bekannte Extraktreinigungsverfahren sehr große Mengen von Kalk erfordern. Die verbrauchte Menge an Kalk beträgt etwa 2,5 % des Gesamtgewichts der verarbeiteten Zuckerrüben (bei einem Tägesdurchsatz von etwa 10.000 t Zuckerrüben in einer "Zuckerfabrik" bedeutet dies einen Kalkaufwand von 250 t pro Tag). Daher ist die Herstellung des im bekannten Katk-Köhtensäure-Extraktreimgungsverfahren verwendeten Kalks und die Beseitigung des bei der Brandkalkherstellung entstehenden Abfalls aufwendig und teuer. Außerdem werden die Kalköfen durch den hohen Koksumsatz stark belastet und können in vielen bestehenden Anlagen nur mit schlechtem Wirkungsgrad betrieben werden. Ein weiterer Nachteil ist die starke Belastung der Ausmauerung der Kalköfen.

Gleichzeitig sind die Emissionen des Treibhausgases Kohlenstoffdioxid aus den Kalköfen und den Saftreinigungsanlagen hoch. Da das Kohlenstoffdioxid aus fossiler beziehungsweise mineralischer Quelle stammt, besteht eine Umweltbelastung.

Außerdem belastet das hohe Kalkaufkommen in der bekannten Extrakteinigung die Filteranlagen der Carbonatationsstufen und führt zu unerwünscht kurzen Filterstandzeiten. Darüber hinaus lässt sich der bei bekannten Extraktreinigungsverfahren anfallende Carbokalk nur begrenzt weiterverwerten.

Beispiele für detartige Reinigungsverfahren mit dem Schritten Vorkalken, kaltes Hauptkalken und heßies Hauptkalken sind beispielsweise dem Veröffentlichungen US4795494, US5480490 und B. Frommelt, INT. SUGAR JNL.1997, vol. 99, NO. 1183B, seiter 328-332 zu entnehmen.

Es ist daher wünschenswert, den Kalkverbrauch bei der Vorkalkungbeziehungsweise Hauptkalkung des Zuckerrüben-Rohsafts zu verringern. Dabei soll die Effektivität der Extraktreinigung weiter verbessert werden oder zumindest erhalten bleiben.

In bekannten Kalk-Kohlensäure-Extrakteinigungsverfahren wirkt das gebildete Calciumcarbonat als Filtrierungsmittel. Wird der Kalkmilcheintrag gesenkt, verschlechtert sich nicht nur das Reinigungsergebnis, ebenfalls leidet die Filtrierbarkeit des Rohsafts nach der Carbonatation.

Der vorliegenden Erfindung liegt das technische Problem zugrunde, ein alternatives und verbessertes Verfahren zur Reinigung von Zuckerrüben-Rohsaft bereitzustellen, wobei vor allem der Kalkeinsatz reduziert ist.

Die vorliegende Erfindung löst das ihr zugrunde liegende technische Problem im Wesentlichen durch die Bereitstellung eines Verfahrens zur Reinigung von Zuckerrüben-Rohsaft, welches zumindest die folgenden Verfahrensschritte enthält:

In einem ersten Schritt (a) wird der Zuckerrüben-Rohsaft einer Vorkalkung unterzogen. Vorzugsweise findet die Vorkalkung durch Zugabe von Kalkmilch statt, die bis zu einer Konzentration von 0,1 bis 0,3 g CaO/100 ml, vorzugsweise bis zu einer Konzentration von 0,2 g CaO/100 ml, zugefügt wird. So wird ein vorgekalkter Rohsaft erhalten. Vorzugsweise wird in Schritt (a) die Vorkalkung als "kalte Vorkalkung" bei niedriger Temperatur, das heißt bei einer Temperatur von 75 °C oder weniger, bevorzugt in einem Temperaturbereich von 35-65 °C durchgeführt.

Bevorzugt wird vorzugsweise nach der ersten Hauptkalkung in Schritt (b) und vorzugsweise vor dem oder beim Klären des gekalkten Rohsafts in Schritt (c) zur Verbesserung des Absetzens der nicht Nichtsaccharosestoff-Fraktion in Schlamm mindestens ein Flockungshilfsmittel zugegeben. Vorzugsweise wird das Flockungshilfsmittel bis zu einer Konzentration von 1 bis 8 ppm zugegeben. Vorzugsweise ist das Flockungshilfsmittel ausgewählt aus polyanionischen Makromolekülen, polyanionischen Polysacchariden, bevorzugt aus Acrylamiden und Copolymeren aus Acrylamid und Natriumacrylat. Vorzugsweise weist das Flockungshilfsmittel eine Molekülmasse von durchschnittlich etwa 5x10⁶ bis 22x10⁶ g/mol auf. Besonders bevorzugt sind Flockungshilfsmittel auf Basis von Polysacchariden, besonders derivatisierte, insbesondere alkylierte Stärke und derivatisierte, insbesondere alkylierte Cellulose. In einer bevorzugten Variante werden carboxymethylierte Cellulose, und/oder carboxymethylierte Stärke, bevorzugt in hochmethylierter Form eingesetzt. Im weiteren Varianten werden alkoxylierte Cellulose und/oder alkoxylierte Stärke eingesetzt. In weiteren Varianten werden Mischungen oder Zusammensetzungen der vorgenannten Flockungshilfsmittel eingesetzt. Die Erfindung betrifft demgemäß auch ein Verfahren zur Rohsaftreinigung, worin die vorgenannten Flockungshilfsmittel zur verbesserten Klärung des gekalkten Rohsafts, insbesondere während des Verweilens in der Abtrennungsvorrichtung, eingesetzt werden. Ein erfindungsgemäßes Verfahren zur Reinigung von Zuckerrüben-Rohsaft umfasst zumindest die Schritte (a) und (d), wobei zum Klären des Rohsafts mindestens ein Flockungshilfsmittel, ausgewählt aus, bevorzugt hoch carboxymethylierten, Carboxymethylstärken, Carboxymethylcellulosen und Gemischen davon, zugegeben wird.

Besonders bevorzugt wird zur Rohsaftreinigung eine hoch carboxymethylierte Stärke mit einem Substitutionsgrad von 0,6 oder mehr, bevorzugt von 0,6 bis 0,7 eingesetzt. Der maximale Substitutionsgrad beträgt insbesondere 1,5.

Zur Herstellung der hoch carboxymethylierten Stärke wird Stärke, ausgewählt aus Kartoffel-, Mais-, Wachsmais- und Amylopektinkartoffelstärke oder Mischungen daraus, besonders Kartoffelstärke, eingesetzt. Diese wird in an sich bekannter Weise carboxymethyliert. Die Erfindung betrifft bevorzugt die Carboxymethylierung der Stärke, insbesondere Kartoffelstärke, im Kleister mit Natriummonochloracetat (NaClOAc: Cl-CH₂-COO⁻ Na⁺) unter alkalischen Bedingungen: Durch eine zweistufige Carboxymethylierung wird der hohe Substitutionsgrad des Produkts und auch eine bessere Umsetzung erreicht.

Im weiteren, vorzugsweise unmittelbar nachfolgenden Schritt (b) findet eine erste Hauptkalkung des vorgekalkten Rohsaftes (Vorkalkungssaft) statt. Dazu wird vorzugsweise weitere Kalkmilch zum Vorkalkungssaft zugegeben bis eine Konzentration von 0,3 bis 0,5 g CaO/100 ml, vorzugsweise von 0,4 g CaO/100 ml, erreicht wird. So wird ein gekalkter Rohsaft erhalten. Vorzugsweise wird in Schritt (b) die erste Hauptkalkung als "kalte Hauptkalkung" bei niedriger Temperatur, das heißt bei einer Temperatur von 75 °C oder weniger, bevorzugt in einem Temperaturbereich von 35 bis 65 °C durchgeführt.

Im weiteren, vorzugsweise unmittelbar nachfolgenden, Schritt (c) wird der gekalkte Rohsaft in einer ersten Abtrennvorrichtung geklärt. Dies findet statt durch Abtrennen einer Fraktion, die im Wesentlichen die Nichtsaccharosestoffe enthält, wobei ein geklärter, das heißt klarer, gekalkter Rohsaft erhalten wird. In diesem Zusammenhang wird unter dem Begriff "Klären" beziehungsweise "geklärt" der Vorgang des Abtrennens der ausgeflockten Nichtsaccharosestoff-haltigen Fraktion aus dem Rohsaft verstanden, sodass ein optisch klarer, im Wesentlich von Schwebstoffen und ausgeflockten Stoffen befreiter geklärter Rohsaft erhalten wird.

Vorzugsweise beträgt die Verweilzeit des gekalkten Rohsaftes in Schritt (c) in der ersten Abtrennvorrichtung mindestens 40 Minuten oder mehr, vorzugsweise mindestens 60 Minuten oder mehr. In einer weiteren bevorzugten Variante beträgt die Verweilzeit in der ersten Abtrennvorrichtung von 40 bis 60 Minuten. Vorzugsweise beträgt die Temperatur in Schritt (c) mindestens 70 °C oder mehr, vorzugsweise mindestens 75 °C oder mehr. In einer bevorzugten Variante beträgt die Temperatur von 75°C bis 85°C.

Bevorzugt wird die erhöhte Temperatur durch Vorschalten eines Wärmetauschers oder Durchlauferhitzers, der von gekalktem Rohsaft durchflossen wird, erreicht. Schritt (c) wird demgemäß bevorzugt in einen ersten Schritt (c1), Aufheizen des gekalkten Rohsafts, und einen zweiten Schritt (c2), Verweilen in der ersten Abtrennvorrichtung, sodass der Rohsaft von einer Fraktion aus Nichtsaccharosestoffen getrennt wird und geklärter Rohsaft erhalten wird, unterteilt.

In einem bevorzugten weiteren, vorzugsweise unmittelbar nachfolgenden, Schritt (d) findet eine zweite Hauptkalkung des klaren gekalkten Rohsaftes statt. Vorzugsweise wird in Schritt (d) weitere Kalkmilch bis zu einer Konzentration von 0,4 g bis 0,7 g CaO/100 ml, vorzugweise von 0,4 CaO/100 ml, zugegeben.

Erste und zweite Hauptkalkung zeichnen sich dadurch aus, dass der vorgekalkte Rohsaft, der eine Alkalität aufweist, die erfindungsgemäß von 0,1 bis 0,3 g CaO/100 ml beträgt, weiter alkalisiert wird. Dazu wird weitere Alkalität in Form von Kalkmilch eingetragen. Wird der Rohsaft in der Vorkalkung bis zu einer Konzentration von beispielsweise 0,1 g CaO/100 ml alkalisiert, erfolgt bei der ersten erfindungsgemäßen Hauptkalkung eine weitere Zugabe von Kalkmilch statt, sodass eine (End-)Konzentration von vorzugsweise 0,3 bis 0,5 g CaO/100 ml erreicht wird. Wird hingegen bereits die Vorkalkung bis zu einer Konzentration von 0,3 g CaO/100 ml durchgeführt, wird bei der ersten Hauptkalkung wiederum Kalkmilch zugegeben, sodass eine Konzentration von mehr als 0,3 g CaO/100 ml bis vorzugsweise maximal 0,5 g CaO/100 ml erreicht wird.

Vorzugsweise wird die zweite Hauptkalkung als "heiße Hauptkalkung" bei hoher Temperatur durchgeführt. Dabei beträgt die Temperatur in Schritt (d) 70 °C oder mehr, vorzugsweise 75 °C oder mehr. In einer bevorzugten Variante beträgt die Temperatur von 75°C bis 95°C, vorzugsweise 85°C.

Bevorzugt wird die erhöhte Temperatur in der zweiten Hauptkalkung durch Vorschalten eines Wärmetauschers oder Durchlauferhitzers, der vom geklärten Rohsaft durchflossen wird, erreicht. Schritt (d) wird demgemäß bevorzugt in einen ersten Schritt (d1), Aufheizen des geklärten Rohsafts, und einen zweiten Schritt (d2), zweite heiße Hauptkalkung des geklärten Rohsafts, unterteilt.

Das erfindungsgemäße Verfahren sieht also vor, dass sich an eine Vorkalkung eine erste Hauptkalkung anschließt, wobei der Rohsaft in eine (erste) Abtrennvorrichtung überführt wird. Erst anschließend nach einer gewissen Verweildauer in der Abtrennvorrichtung, bevornach einer gewissen Verweildauer in der Abtrennvorrichtung, bevorzugt in Gegenwart von Flockungshilfsmitteln, wird eine zweite Hauptkalkung durchgeführt.

Die Erfinder fanden überraschend, dass durch den Einsatz einer (ersten) Abtrennvorrichtung, die einer ersten Hauptkalkung nachgeschaltet ist, die Effektivität der Abtrennung und Aufspaltung von Nichtsaccharosestoffen während der Hauptkalkung verbessert werden kann. Durch diese überraschende Steigerung der Effektivität der Hauptkalkungswirkung, kann der Kalkmilcheintrag in der Hauptkalkung verringert werden. Im Vergleich mit bekannten Extraktreinigungsverfahren wird die so genannte Hauptkalkungsstufe also auf drei Teilstufen aufgeteilt: Erste Hauptkalkung, Verweilen in einer (ersten) Abtrennvorrichtung und zweite Hauptkalkung. Dadurch wird vor allem erreicht, dass die Verweildauer des Zuckerrüben-Rohsafts in der Hauptkalkungsstufe verlängert wird. Erfindungsgemäß wird vor allem in der (ersten) Abtrennvorrichtung sowohl die Abtrennung einer Fraktion von Nichtsaccharosestoffen erreicht, als auch gleichzeitig die mit der Hauptkalkung erwünschten Vorgänge wie Abbau von weiteren Nichtsaccharosestoffen.

Es zeigt sich überraschend, dass beispielsweise die Verseifung nachteiligerweise im Rohsaft enthaltener Amide wie Glutamin während der erfindungsgemäß ausgedehnten Hauptkalkungsphase gesteigert werden kann. Bei bekannten Extraktreinigungsverfahren, die mit einer Hauptkalkungsalkalität von etwa 0,8 g CaO/100 ml bei einer Hauptkalkungstemperatur von 85°C und einer Hauptkalkungsdauer von 20 Minuten arbeiten, können ca. 90 % des im Rohsaft vorhandenen Glutamins verseift werden. Es hat sich überraschenderweise gezeigt, dass durch das erfindungsgemäße Vorgehen der erforderliche Amidverseifungsgrad von 90 % bereits bei einer Hauptkalkungsalkalität von 0,4 g CaO/100 ml erreicht werden kann. Demgemäß reduziert sich vorteilhafterweise der Gesamtkalkverbrauch im erfindungsgemäßen Verfahren um ca. 40 % gegenüber bekannten Extraktreinigungsverfahren bei gleichzeitig gleich bleibender oder verbesserter Qualität des erhaltenen Dünnsaftes beziehungsweise geklärten Rohsaftes.

Durch die effektivere Hauptkalkung wird ein geklärter Rohsaft in höherer Qualität erhalten und gegebenenfalls kann auf eine Nachkalkung des Rohsaftes nach der ersten Carbonatationsstufe verzichtet werden. Das erfindungsgemäße Verfahren eignet sich darüber hinaus vorteilhafterweise auch zur Verarbeitung von Rübenmaterial mit schlechterer Qualität, vor allem von alterierten Rüben. Dies bedeutet vor allem, dass die Kampagnezeit, das heißt die Zeit, in der die geernteten und zwischengelagerten Rüben in der Zuckerfabrik verarbeitet werden, verlängert werden kann. Dadurch ergibt sich vorteilhafterweise eine Reduzierung des Koksverbrauchs, eine Entlastung der Kalköfen, die nun mit erhöhtem Wirkungsgrad, erhöhter Ausbeute, hohem Weichbrandanteil und mit Entlastung der Ausmauerung betrieben werden können, und eine Reduzierung der umweltschädlichen Kohlenstoffdioxid Emissionen.

Weiter ergibt sich durch den erfindungsgemäß verminderten Kalkeintrag eine Entlastung der Filtrationsstufen bei der Carbonatation und die Verlängerung der Filterstandzeiten, da weniger Calciumcarbonat anfällt. Dadurch wird auch das Aufkommen an Schlammsaftkonzentrat sowie an Carbokalk reduziert, was zur Entlastung der so genannten Carbokalkpressen führt. Die dadurch bedingte Erhöhung der Kapazität der Carbokalkpressen erlaubt die Erzeugung eines Carbokalks in höherer beziehungsweise garantiert gleich bleibender hoher Qualität. Bei der Durchführung des erfindungsgemäßen Verfahrens kann ein Carbokalk erzeugt werden, der einen garantierten CaO-Gehalt von mindestens 30 g/100 g (TS) beziehungsweise mindestens 21 g/100 g Carbokalk aufweist. Dabei betragen W_{TS} = 70 % und W_{z} = 0,7 %. Es werden pro 100 kg eingesetzter Rüben maximal nur etwa 2 kg oder weniger an Carbokalk erhalten. Der Zuckerverlust beträgt maximal ca. 0,015 kg/100 kg Rüben oder weniger.

Die in der ersten Abtrennvorrichtung getrennte Fraktion von Nichtsaccharosestoffen ist überraschenderweise besonders eiweißhaltig und wird demgemäß auch als "Eiweißfraktion" bezeichnet. Diese Eiweißfraktion kann vorteilhafterweise als betrieblicher Hilfsstoff in bei der Zuckerrübenverarbeitung regelmäßig vorgesehenen Trocknungsanlage für Rübenschnitzel eingesetzt werden, vor allem, um die TOC-, SO₂-Emissionen und den Energieverbrauch in der Schnitzeltrocknungs-anlage zu vermindern. Vorteilhafterweise kann in der ersten Abtrennvorrichtung eine eiweißhaltige Fraktion in einer Menge von mindestens etwa 0,4 kg (TS) pro 100 kg Rüben erhalten werden.

In bekannten Extraktreinigungsverfahren ist die Senkung des Kalkverbrauches unter anderem durch die Verschlechterung der Filtrierbarkeit limitiert. Es zeigt sich überraschend, dass diese Limitierung durch das erfindungsgemäße Verfahren überwunden werden kann. Die Grenze für die weitere Reduzierung des Kalkverbrauches ergibt sich nur durch die Thermostabilität des gekalkten Dünnsaftes.

Im Zusammenhang mit der vorliegenden Erfindung wird unter "Zuckerrüben-Rohsaft" der Saft verstanden, der bevorzugt aus Schnitzeln vorzugsweise durch Gegenstromextraktion bei bevorzugt etwa 65 bis 75°C im so genannten Diffusionsverfahren extrahiert wird. Dieser zuckerreiche Zuckerrüben-Rohsaft enthält neben Zucker noch verschiedene organische und anorganische Bestandteile der Rübe, die als Nichtsaccharosestoffe oder Nichtzuckerstoffe bezeichnet werden.

Im Zusammenhang mit der vorliegenden Erfindung werden unter den im Zuckerrüben-Rohsaft enthaltenen "Nichtsaccharosestoffen" vor allem hochmolekulare Substanzen wie Eiweißstoffe, Polysaccharide und Zellwandbestandteile sowie niedrigmolekulare organische Verbindungen wie anorganische oder organische Säuren, Aminosäuren und mineralische Stoffe verstanden. Bei den Zellwandbestandteilen handelt es sich besonders um Pektine, Lignin, Cellulose und Hemicellulose. Diese Stoffe liegen ebenso wie die Eiweiße, zu denen neben Proteinen, insbesondere Nucleoproteide gehören, als hydrophile Makromoleküle in kolloidal-disperser Form vor. Bei den organischen Säuren handelt es sich beispielsweise um Lactat, Citrat und Oxalat. Bei den anorganischen Säuren handelt es sich insbesondere um Sulfate und Phosphate.

Unter "Kalkmilch" wird erfindungsgemäß insbesondere Calciumhydroxid verstanden, das bei der stark exothermen Reaktion von gebranntem Kalk (Calciumoxid) mit Wasser gebildet und bei der Vorkalkung und Hauptkalkung als Kalkungsmittel eingesetzt wird. Die Zugabe von Kalkmilch zum Zuckerrüben-Rohsaft in der Vorkalkung bewirkt die Fällung oder Koagulation von Nichtsaccharosestoffen in Form eines Koagulates.

Die Zugabe von Kalkmilch zur Vorkalkung des Zuckerrüben-Rohsaftes erfolgt erfindungsgemäß bevorzugt als progressive Vorkalkung. Die progressive Vorkalkung durch eine allmähliche Steigerung der Alkalität beziehungsweise des pH-Wertes des Zuckerrüben-Rohsaftes erfolgt vorzugsweise durch langsamen Zulauf des Kalkmilch-Kalkungsmittel oder durch kleine unterbrochene KalkmilchEinzeizugaben, wobei insbesondere das pH-Optimum langsam durchlaufen wird. Die Vorteile der progressiven Vorkalkung sind unter anderem eine Verbesserung der Filtrationseigenschaften des behandelten Saftes, eine hellere Dicksaftfarbe und eine Vermeidung der Überalkalisierung. Darüber hinaus ermöglicht die progressive Vorkalkung eine kontinuierliche Arbeitsweise.

Erfindungsgemäß ist ebenfalls vorgesehen, dass die progressive Alkalisierung des Zuckerrüben-Rohsaftes während der Vorkalkung im Gegenstrom durch einen bereits alkalisierten Zuckerrüben-Rohsaft, beispielsweise mittels des Schlammsaftkonzentrats aus den Carbonatationsstufen und/oder hauptgekalkten Rohsaft, erfolgen kann. Die progressive Alkalisierung im Gegenstrom bedeutet, dass der zurückgeführte Saft höherer Alkalität so schnell wie möglich mit einem Saft niedrigerer Alkalität vermischt wird, ohne dass sich innerhalb der Mischzone unterschiedliche Alkalitätsgradienten aufbauen können. Unter Verwendung geeigneter Transportsysteme im Vorkalkungsapparat wird innerhalb des Systems dafür gesorgt, dass die erforderliche Rückführmenge mit hoher Konstanz entgegen der Hauptströmungsrichtung geführt wird.

In bevorzugter Ausführung der Erfindung findet Schritt (a) in einem (ersten) Alkalisierungsbehälter statt. Bevorzugt findet Schritt (b) in einem (zweiten) Alkalisierungsbehälter statt. Die Erfindung sieht bevorzugt vor, Vorkalkung und erste Hauptkalkung in getrennten Behältern durchzuführen. Demgemäß wird der zu reinigende Rohsaft zunächst in Schritt (a) in einem ersten Alkalisierungsbehälter vorgekalkt und anschließend in einem zweiten Alkalisierungsbehälter verbracht, der vom ersten Alkalisierungsbehälter getrennt und diesem nachgeschaltet ist, um in Schritt (b) die erste Hauptkalkung, durchzuführen. In einer weiteren Variante werden die Vorkalkung in Schritt (a) und die erste Hauptkalkung in Schritt (b) im selben Alkalisierungsbehälter, aber zeitlich hintereinander durchgeführt, wobei zunächst die Vorkalkung durchgeführt wird und anschließend, in demselben Behälter, die erste Hauptkalkung durchgeführt wird. Der Beginn der ersten Hauptkalkung ist vor allem dadurch charakterisiert, dass durch weitere Kalkmilchzugabe die Vorkalkungsalkalität weiter erhöht wird bis die erfindungsgemäße Alkalität der ersten Hauptkalkung, erreicht ist.

In bevorzugter Ausführung ist die erste Abtrennvorrichtung derart gestaltet, dass in Schritt (c) eine lange Verweildauer des Rohsaftes in der Abtrennvorrichtung möglich ist. Bevorzugt ist die erste Abtrennvorrichtung ein Dekanter, besonders bevorzugt ein statischer oder dynamischer Dekanteur. Es versteht sich, dass auch jede andere bekannte Abtrennvorrichtung verwendet werden kann, die eine Abtrennung der Fraktion von Nichtsaccharosestoffen und die erfindungsgemäße Verweildauer erlaubt.

Unter einem statischen Dekanter" oder "statischen Dekanteur" wird eine Vorrichtung oder ein Apparat verstanden, der zur mechanischen Entfernung von sedimentierten Stoffen aus einer Flüssigkeit nach dem Sedimentationsprinzip mit Hilfe der Schwerkraft dient. Bevorzugt ist vorgesehen, dass unter Verwendung des Dekanteurs die nach der Vorkalkung ausgefällten oder ausgeflockten Nichtsaccharosestoffe vom gekalkten Rohsaft so getrennt werden, dass sich am Unterlauf des Dekanteurs ein Volumenteil Schlamm bezogen auf etwa vier Volumenteile gekalktem Rohsaft absetzt. Bei Rückführung von Schlammsaftkonzentrat aus den Carbonatationsstufen in die Vorkalkung ist erfindungsgemäß vorgesehen, dass unter Verwendung des Dekanteurs die nach der Vorkalkung ausgefällten oder ausgeflockten Nichtsaccharosestoffe vom gekalkten Rohsaft so getrennt werden, dass sich am Unterlauf des Dekanteurs ein Volumenteil Schlamm bezogen auf etwa neun Volumenteile gekalktem Rohsaft absetzt.

In bevorzugter Ausführung werden die in Schritt (c) abgetrennten Nichtsaccharosestoffe beziehungsweise die Nichtsaccharosestoffhaltige Fraktion als so genannter Dünnschlamm weiter aufkonzentriert. Dabei wird in mindestens einem weiteren Schritt (c3) in einer zweiten oder weiteren Abtrennvorrichtung eine Saccharose-haltige Fraktion daraus abgetrennt, wodurch die Nichtsaccharosestoffhaltige Fraktion weiter aufkonzentriert wird. Bevorzugt wird als zweite oder weitere Abtrennvorrichtung eine Zentrifuge verwendet. Vorzugsweise ist die Zentrifuge ausgewählt aus Tellerzentrifugen beziehungsweise Tellerseparatoren und Dekanterzentrifugen. Die zweiten und weiteren Abtrennvorrichtungen sind wahlweise unmittelbar hintereinander geschaltet, das heißt der Schlammauslass einer ersten weiteren Abtrennvorrichtung ist mit dem Einlass einer zweiten weiteren Abtrennvorrichtung verbunden. Es ist aber auch vorgesehen, dass der Schlammauslass einer ersten weiteren Abtrennvorrichtung über einen Mischbehälter oder eine ähnliche Vorrichtung mit dem Einlass einer zweiten weiteren Abtrennvorrichtung verbunden ist. Bevorzugt werden die aus den zweiten und weiteren Abtrennvorrichtungen abgetrennten Saccharose-haltigen Klarsäfte beziehungsweise Absüßsäfte wieder in den erfindungsgemäßen Extraktreinigungsprozess zurückgeführt. Vorzugsweise findet die Rückführung zwischen kalter Hauptkalkung im Schritt (b) und dem Verweilen in der ersten Abtrennvorrichtung im Schritt (c) statt.

Die in dem mindestens einen weiteren Schritt (c3) weiter aufkonzentrierte Nichtsaccharosestoff-haltige Fraktion, die auch als aufkonzentrierte "eiweißhaltige Fraktion" bezeichnet wird, wird aus dem Extraktreinigungsprozess abgeführt (Schritt (c4)). So entsteht eine Nichtsaccharosestoff-hattige Fraktion aus Zuckerrüben-Rohsaft.

In bevorzugter Ausführung wird der in Schritt (d) erhaltene klare gekalkte Rohsaft nach der zweiten Hauptkalkung der Carbonatation zugeführt. Bevorzugt wird dazu im Anschluss an Schritt (d) in einem weiteren, vorzugsweise unmittelbar nachfolgendem Schritt (e) mindestens eine Carbonatation durch Einleiten von Kohlenstoffdioxid in den Hauptkalkungssaft durchgeführt. Im Anschluss an die Carbonatation findet eine Filtration des entstehenden Schlamms statt. Dabei wird ein klarer Saccharosesirup erhalten. Die Carbonatation findet im Wesentlichen in an sich bekannter Weise statt.

Besonders bevorzugt ist die Carbonatation in Schritt (e) als zweioder mehrstufige Carbonatation ausgebildet. Vorzugsweise findet in Schritt (e) eine erste Carbonatation und erste Filtration in Schritt (e1) und, vorzugsweise unmittelbar, anschließend eine zweite Carbonatation und zweite Filtration in Schritt (e2) statt. Im Anschluss an die zweite Carbonatation kann sich, je nach Anwendungsgebiet und Zweckmäßigkeit, eine dritte und weitere Carbonatation und Filtration anschließen.

Ein weiterer Gegenstand der Erfindung ist ein Verfahren zur Herstellung von Saccharosesirup aus Zuckerrüben-Rohsaft. Dieses Verfahren umfasst erfindungsgemäß in einem ersten Schritt das Bereitstellen des Zuckerrüben-Rohsaftes, wie er vorzugsweise aus der Gegenstromextraktion von Zuckerrübenschnitzeln erhalten wird. Danach wird das erfindungsgemäße Extraktreinigungsverfahren mit zumindest den Schritten (a) bis (c) und vorzugsweise (d), wie es vorstehend beschrieben ist, durchgeführt. Danach wird ein einem weiteren Schritt ein von Nichtsaccharosestoffen befreiter und geklärter Saccharosesirup erhalten. Dieser kann gegebenenfalls ein einem weiteren Schritt in an sich bekannter Weise kristallisiert werden, sodass kristalline Saccharose erhalten wird.

Ein weiterer Gegenstand der Erfindung ist ein Verfahren zur Herstellung einer Zusammensetzung von Nichtsaccharosestoffen, das heißt einer Nichtsaccharosestoff-haltigen Fraktion, die auch als eiweißhaltige Komponente bezeichnet wird, aus Zuckerrüben-Rohsaft. Dieses Verfahren umfasst erfindungsgemäß in einem ersten Schritt das Bereitstellen von Zuckerrüben-Rohsaft. Danach werden zumindest die Schritte (a) bis (c) des vorgenannten erfindungsgemäßen Verfahrens durchgeführt. Vorzugsweise wird die erhaltene Nichtsaccharosestoffhaltige Fraktion durch weiteres Aufkonzentrieren der Fraktion durch mindestens einen der Schritte (c3) erreicht. In einem weiteren Schritt wird danach eine abgetrennte, vorzugsweise aufkonzentrierte Nichtsaccharosestoff-haltige Zusammensetzung erhalten.

Ein weiterer Gegenstand der Erfindung ist auch ein Verfahren zur Herstellung von Carbokalk aus Zuckerrüben-Rohsaft und Kalkmilch. In einem ersten Schritt des erfindungsgemäßen Verfahrens wird Zuckerrüben-Rohsaft bereitgestellt. In einem weiteren Schritt wird das vorbezeichnete Extraktreinigungsverfahren inklusive des Schritts (e) durchgeführt, wobei bei der Carbonatation und Filtration Schlamm erhalten wird. In einem weiteren Schritt wird der erhaltene Schlamm in an sich bekannter Weise, vorzugsweise über Carbokalkpressen entwässert, sodass im Wesentlichen trockener Carbokalk erhalten wird. Bevorzugt wird zur Entwässerung des bei der Carbonatation und Filtration erhaltenen Schlamms, dem so genannten "Schlammsaft" eine Abtrennvorrichtung verwendet, vorzugsweise eine Membranfilterpresse. Bevorzugt ist die Membranfilterpresse ausgewählt aus Rahmenfilterpressen und Kammerfilterpressen. Diese werden in an sich bekannter Weise betrieben. Dabei wird Carbokalk erhalten, der einen Trockensubstanz-Gehalt von mindestens 65 %, vor allem von 70 % oder mehr aufweist. Besonders bevorzugt wird der Trockensubstanz-Gehalt auf genau 70 % eingestellt. Der Zuckergehalt beträgt bevorzugt etwa 0,6 bis 0,8 %, vorzugsweise 0,7 %. Vorteilhafterweise kann durch das erfindungsgemäße Verfahren zur Herstellung von Carbokalk der Zuckerverlust bei der Reinigung des Zuckerrüben-Rohsafts auf etwa 0,015 kg/100 kg eingesetzter Rüben begrenzt werden.

Schließlich ist ein weiterer Gegenstand der Erfindung eine Vorrichtung zur Durchführung des erfindungsgemäßen Reinigungsverfahrens. Die Vorrichtung enthält zumindest einen ersten Alkalisierungsbehälter (10), worin die Vorkalkung (Schritt (a)) durchgeführt wird. Die erfindungsgemäße Vorrichtung weist weiter zumindest einen zweiten Alkalisierungsbehälter (20) auf, worin die erste Hauptkalkung (Schritt (b)) durchgeführt wird. Die erfindungsgemäße Vorrichtung weist weiter eine (erste) Abtrennvorrichtung (30) auf, worin der der Vorkalkung und ersten Hauptkalkung gekalkte Rohsaft geklärt wird und eine Fraktion von Nichtsaccharosestoffen aus dem gekalkten Rohsaft abgetrennt wird. Die erfindungsgemäße Vorrichtung weist vorzugsweise außerdem zumindest einen dritten Alkalisierungsbehälter (40) auf, worin die zweite Hauptkalkung durchgeführt wird.

Der erste Alkalisierungsbehälter (10) weist zumindest einen Zulauf (11) für die Zuführung des Zuckerrüben-Rohsaftes auf. Er weist weiter zumindest eine Einrichtung (12) für die Dosierung von Kalkmilch auf. Diese ist in an sich bekannter Weise ausgeführt. In einfachster Ausführungsform ist die Dosierungseinrichtung eine Düse mit steuerbarem Ventil. Weiter weist der erste Alkalisierungsbehälter zumindest einen Ablauf (13) auf, wodurch der gekalkte Vorkalkungssaft abgeführt werden kann.

Der zweite Alkalisierungsbehälter (20) weist zumindest einen Zulauf (21) auf, wodurch der Vorkalkungssaft in dem zweiten Alkalisierungsbehälter zugeführt werden kann. Besonders bevorzugt sind erster und zweiter Alkalisierungsbehälter so hintereinander geschaltet, dass der aus dem Ablauf (13) des ersten Alkalisierungsbehälters austretende Vorkalkungssaft unmittelbar über den Zulauf (21) in den zweiten Alkalisierungsbehälter überführt wird. Weiter weist der zweite Alkalisierungsbehälter zumindest eine Einrichtung (22) für die Dosierung von Kalkmilch auf. Zweckmäßigerweise ist diese entsprechend der Einrichtung (12) des ersten Alkalisierungsbehälters aufgebaut. Der zweite Alkalisierungsbehälter weist weiter zumindest einen Ablauf (23) auf, wodurch der gekalkte Rohsaft nach der ersten Hauptkalkung ausgeführt werden kann.

Erfindungsgemäß weist die Abtrennvorrichtung (30) zumindest einen Zulauf (31) für den gekalkten Rohsaft zumindest einen Ablauf (33) für den geklärten gekalkten Rohsaft auf. Vorzugsweise ist die (erste) Abtrennvorrichtung so mit dem ersten und zweiten Alkalisierungsbehälter verbunden, dass der aus dem Ablauf (23) des zweiten Alkalisierungsbehälter austretende gekalkte Rohsaft über den Zulauf (31) in die (erste) Abtrennvorrichtung eintreten kann. Das heißt, der Zulauf (31) steht mit dem Ablauf (23) in Verbindung. Vorzugsweise wird die (erste) Abtrennvorrichtung (30) bei hoher Temperatur von mindestens 70°C oder mehr betrieben. In bevorzugter Ausführung ist die (erste) Abtrennvorrichtung (30) ein statischer Dekanter.

Der bevorzugt vorgesehene dritte Alkalisierungsbehälter (40) enthält zumindest einen Zulauf (41), wodurch der klare gekalkte Rohsaft, der die (erste) Abtrennvorrichtung verlässt, zugeführt wird. Vorzugsweise ist der dritte Alkalisiemngsbehälter so mit der (ersten) Abtrennvorrichtung verbunden, sodass der aus dem Ablauf (33) der (ersten) Abtrennvorrichtung austretende geklärte gekalkte Rohsaft über den Zulauf (41) in den dritten Alkalisierungsbehälter eintreten kann. Das heißt der Zulauf (41) steht mit dem Ablauf (33) der (ersten) Abtrennvorrichtung in Verbindung. Weiter weist der dritte Alkalisierungsbehälter (40) vorzugsweise zumindest eine Einrichtung (42) für die Dosierung von Kalkmilch auf. Zweckmäßigerweise ist die Einrichtung (42) wie die Einrichtung (12) beziehungsweise wie die Einrichtung (22) ausgeführt. Weiter weist der dritte Alkalisierungsbehälter zumindest einen Ablauf (43) auf, wodurch der gekalkte Rohsaft nach erfolgter zweiter Hauptkalkung austreten kann.

In bevorzugter Ausführung weist die erfindungsgemäße Vorrichtung weiter zumindest einen Wärmetauscher (50) zum Aufheizen des in der Vorkalkung und ersten Hauptkalkung gekalkten Rohsaftes auf. Bevorzugt weist der Wärmetauscher (60) zumindest einen Zulauf (51) für den gekalkten Rohsaft auf. Bevorzugt sind der erste und zweite Alkalisierungsbehälter so mit dem Wärmetauscher verbunden, dass der über den Ablauf (23) aus dem zweiten Alkalisierungsbehälter austretende gekalkte Rohsaft über den Zulauf (51) in den Wärmetauscher eintreten kann, das heißt, dass der Ablauf (23) des zweiten Alkalisierungsbehälters mit dem Zulauf (51) in Verbindung steht Weiter weist der Wärmetauscher zumindest einen Ablauf (52) auf, wodurch der aufgeheizte gekalkte Rohsaft austritt. Bevorzugt ist der Wärmetauscher (50) mit der (ersten) Abtrennvorrichtung (30) so verbunden, dass der aus dem Ablauf (52) des Wärmetauschers austretende aufgeheizte gekalkte Rohsaft in den Zulauf (31) der (ersten) Abtrennvorrichtung eintreten kann, das heißt, dass der Ablauf (52) mit dem Zulauf (31) der (ersten) Abtrennvorrichtung in Verbindung steht.

In bevorzugter Ausführung weist die erfindungsgemäße Vorrichtung einen Wärmetauscher (60) zum Aufheizen des in der ersten Abtrennvorrichtung geklärten Rohsafts vor Eintritt in die zweite Hauptkalkung auf. Bevorzugt weist der Wärmetauscher (60) zumindest einen Zulauf (61) für den geklärten Rohsaft auf. Bevorzugt sind erste Abtrennvorrichtung (30), der Wärmetauscher (60) und der dritte Alkalisierungsbehälter (40) so miteinander verbunden, dass der über den Ablauf (33) der ersten Abtrennvorrichtung austretende geklärte gekalkte Rohsaft über den Wärmetauscher (60) erhitzt wird und anschließend in den dritten Alkalisierungsbehälter (40) eingeleitet wird, sodass dort eine heiße zweite Hauptkalkung durchgeführt werden kann.

Die erfindungsgemäße Vorrichtung weist vorzugsweise zumindest eine zweite oder weitere Abtrennvorrichtung (70) auf. Diese zweite oder weitere Abtrennvorrichtung dient der weiteren Aufkonzentrierung der in der (ersten) Abtrennvorrichtung (30) abgetrennten Nichtsaccharosestoff-haltigen Fraktion, wobei aus der Nichtsaccharosestoff-haltigen Fraktion wiederum eine Saccharose-haltige Fraktion abgetrennt wird, die vorzugsweise in die Extraktreinigung zurückgeführt wird. Dabei weist die zweite oder weitere Abtrennvorrichtung (70) zumindest einen Zulauf (71) für die Nichtsaccharosestoff-haltige Fraktion, zumindest einen Ablauf (72) für die aufkonzentrierte Nichtsaccharosestoff-haltige Fraktion und zumindest einen Ablauf (73) für eine daraus abgetrennte, vorzugsweise klare, Saccharose-haltige Fraktion auf. Vorzugsweise steht der Zulauf (71) mit dem Ablauf (32) der (ersten) Abtrennvorrichtung (30) in Verbindung, sodass die aus dem Ablauf (32) austretende Nichtsaccharosestoff-haltige Fraktion in die zweite oder weitere Abtrennvorrichtung (70) eintreten kann. Bevorzugt sind zwei oder mehrere weitere Abtrennvorrichtung (70) hintereinander geschaltet, das heißt kaskadiert, sodass eine weitere Aufkonzentrierung der Nichtsaccharosestoff-haltigen Fraktion erfolgen kann. Die dabei jeweils abgetrennte Saccharose-haltigen Fraktionen werden über die jeweiligen Abläufe (73) vorzugsweise gesammelt und in die Extraktreinigung, bevorzugt über Mischbehälter, zurückgeführt. Bevorzugt steht zumindest ein Ablauf (73) der zweiten oder weiteren Abtrennvorrichtung (70) mit dem Zulauf (31) der (ersten) Abtrennvorrichtung (30) in Verbindung, sodass die aus der zweiten oder weiteren Abtrennvorrichtung (70) abgetrennte Saccharose-haltige Fraktion, das heißt Klarsaft oder Absüßsaft in die (erste) Abtrennvorrichtung (30) zurückgeführt werden kann. Vorzugsweise wird die Saccharose-haltige Fraktion vor Rückführung in die (erste) Abtrennvorrichtung (30) über den bevorzugt vorgesehenen Wärmetauscher (50) vor Eintritt in die Abtrennvorrichtung (30) geleitet, sodass die Saccharose-haltige Fraktion, das heißt Klarsaft oder Absüßsaft, auf die erfindungsgemäße Temperatur aufgeheizt werden kann.

In bevorzugter Ausführung ist die zweite oder weitere Abtrennvorrichtung (70) eine Zentrifuge, bevorzugt eine Dekanterzentrifuge.

Die Erfindung wird durch die nachfolgenden Beispiele näher erläutert, wobei diese nicht beschränkend zu verstehen sind.

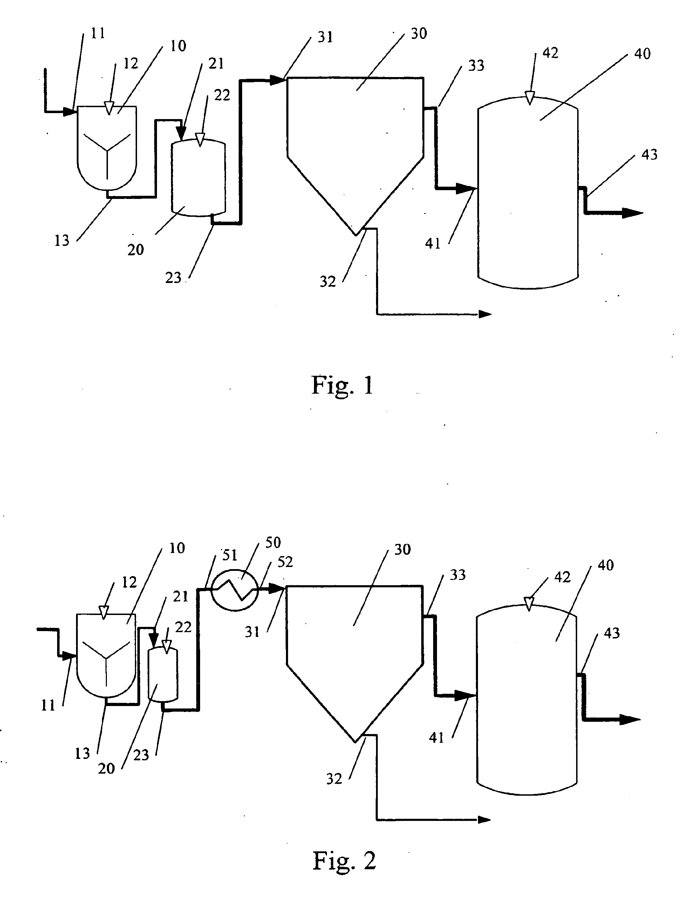

- Figur 1: zeigt den schematischen Aufbau einer bevorzugten erfindungsgemäßen Vorrichtung. Die Vorrichtung weist einen ersten Alkalisierungsbehälter (10) zur Vorkalkung mit einem Zulauf (11) für den Rohsaft, einer Dosierungseinrichtung (12) für die Dosierung von Kalkmilch und einen Ablauf (13) für den gekalkten Vorkalkungssaft auf. Weiter weist die Vorrichtung einen zweiten Alkalisierungsbehälter (20) für die erste Hauptkalkung mit einem Zulauf (21) für den Vorkalkungssaft einer Dosierungseinrichtung (22) für die Dosierung von Kalkmilch und einen Ablauf (23) für den gekalkten Rohsaft auf. Weiter weist die Vorrichtung eine Abtrennvorrichtung (30) zur Klärung des gekalkten Rohsaftes und Abtrennung einer Nichtsaccharosestoff-haltigen Fraktion mit einem Zulauf (31) für den gekalkten Rohsäft, einem Ablauf (32) für die Nichtsaccharosestoff-haltige Fraktion und einen Ablauf (33) für den geklärten gekalkten Rohsaft auf. Die Vorrichtung weist weiter einen dritten Alkalisierungsbehälter (40) zur zweiten Hauptkalkung mit einem Zulauf (41) für den klaren gekalkten Rohsaft, einer Dosierungseinrichtung (42) für die Dosierung von Kalkmilch und einen Ablauf (43) für den gekalkten Rohsaft auf. Gemäß der gezeigten Ausführungsform stehen der Zulauf (21) mit dem Ablauf (13) und der Zulauf (31) mit dem Ablauf (23) und der Zulauf (41) mit dem Ablauf (33) in Verbindung.
- Figur 2: zeigt eine weitere bevorzugte Anordnung der erfindungsgemäßen Vorrichtung. Diese enthält zusätzlich einen Wärmetauscher (50) zum Aufheizen des gekalkten Rohsafts mit einem Zulauf (51) für den gekalkten Rohsaft und einem Ablauf (52) für den aufgeheizten gekalkten Rohsaft.

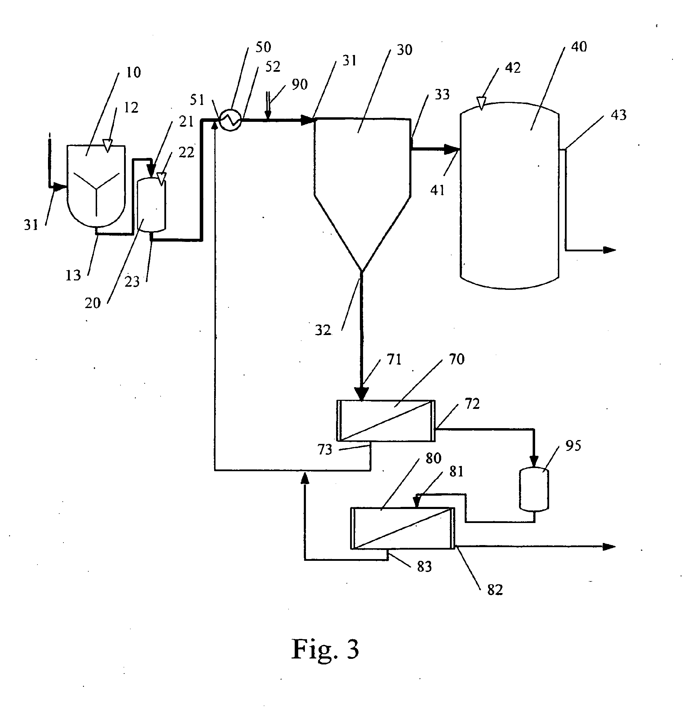

- Figur 3: zeigt eine weitere bevorzugte Ausführung der erfindungsgemäßen Vorrichtung. Diese enthält zusätzlich eine zweite und weitere Abtrennvorrichtung (70,80) der Nichtsaccharosestoff-haltigen Fraktion, die aus der ersten Abtrennvorrichtung (30) austritt. Die zweite oder weitere Abtrennvorrichtung (70,80) weist einen Zulauf (71,81) für die Nichtsaccharosestoff-haltige Fraktion, einen Ablauf (72,82) für die aufkonzentrierte Nichtsaccharosestoff-haltige Fraktion und einen Ablauf (73,83) für eine klare Saccharose-haltige Fraktion auf. Die erste Abtrennvorrichtung (30) ist beispielsweise als Dekanter dargestellt. Zusätzlich weist die Vorrichtung eine Dosierstelle für Flockungshilfsmittel (90) und einen Mischbehälter (95) auf.

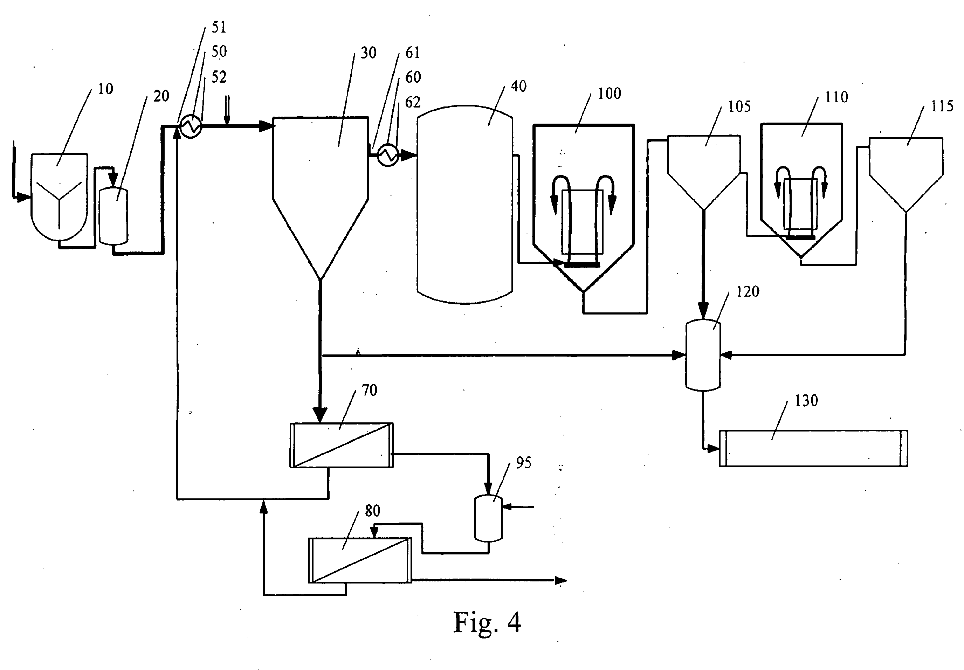

- Figur 4: zeigt die erfindungsgemäße Vorrichtung im Zusammenhang mit der technischen Realisierung des erfindungsgemäßen Verfahrens in einer Saftreinigungsanlage mit Wärmetauschern (50,60) mit Zulauf (51,61) für den geklärten gekalkten Rohsaft und Ablauf (52,62) für den aufgeheizten geklärten gekalkten Rohsaft, erster und zweiter Carbonatationsstufe (100,110), erster und zweiter Filterstufe (105,115), Schlammsaftbehälter (120) und Carbokalkpresse (130).

### Beispiel 1: Extraktreinigung

### 1.1. Extraktion der Zuckerrübe

Zuckerrüben, die frisch geerntet oder einige Zeit gelagert wurden, werden gewaschen und anschließend in einer Schneidmaschine mit Schneidwerk zerkleinert.

Die zerkleinerten Rübenschnitzel werden über einen Maischenbehälter einer Gegenstromextraktionsanlage zugeführt und in dieser extrahiert. Die Temperatur bei der Extraktion beträgt etwa 75°C. Als Extraktor wird ein Turmextraktor eingesetzt, worin die Schnitzel im Gegenstrom mit dem aufgeheizten Frischwasser extrahiert werden. Als Extrakt wird der so genannte Zuckerrüben-Rohsaft gewonnen.

### 1.2. Reinigung des Zuckerrüben-Rohsaftes

Zur Reinigung des bei der Extraktion der Zuckerrübenschnitzel erhaltenen Zuckerrüben-Rohsaftes wird der Rohsaft in einem ersten Schritt in einem Vorkalkungsbehälter durch Zugabe von Kalkmilch alkalisiert, das heißt vorgekalkt. Dabei wird so viel Kalkmilch zugegeben, bis eine Alkalität von 0,2 g CaO/100 ml erreicht wird.

Im Zusammenhang mit der Vorkalkung tritt eine Ausflockung von Nichtsaccharosestoffen durch Koagulation der Nichtsaccharosestoffe untereinander und durch Fällung durch die zugegebene Kalkmilch statt. Zur Unterstützung der Sedimentation wird gegebenenfalls Flockungshilfsmittel, beispielsweise Nr. 2440, 2540 oder 2540 TR (Firma Stockhausen) oder AN 945 (Firma Clarflok) oder Defofloc 26 CG (Firma Defotec) oder Magnafloc LT 27 oder einem nach Beispiel 2 hergestelltem Flockungshilfsmittel auf Basis carboxymethylierter Stärke zugesetzt. Der Anteil beträgt von 1 bis 8 ppm.

Nach erfolgter Vorkalkung wird der vorgekalkte Rohsaft in einem nachgeschalteten weiteren Alkatisierungsbehälter einer ersten kalten Hauptkalkung unterzogen. Dazu wird durch weitere Zugabe von Kalkmilch die Alkalität auf 0,4 g CaO/100 ml erhöht. Die erste Hauptkalkung findet bei Temperaturen von 75°C oder weniger statt

Der Vorkalkung und ersten Hauptkalkung unterzogene gekalkte Rohsaft wird über einen nachgeschalteten Wärmetauscher auf eine Temperatur von etwa 75°C aufgeheizt und in einen statischen oder dynamischen Dekanteur geleitet, worin er für 40 bis 60 Minuten verbleibt. Der Dekanteur wird ebenfalls bei einer Temperatur von etwa 75°C betrieben. Dabei wird die ausgeflockte Nichtsaccharosestoffhaltige Fraktion abgetrennt und aus dem Dekanteur als Dünnschlamm abgeführt. Der Dünnschlamm wird in einem Schlammbehälter gesammelt und später einer Carbokalkpresse zugeführt und/oder in einer zweiten und gegebenenfalls weitren Abtrennvorrichtung in Form einer Dekanterzentrifuge von Klarsaft beziehungsweise Absüßsaft, welcher eine Saccharose-haltige Fraktion ist, getrennt. Der Klarsaft und Absüßsaft wird in das Extraktreinigungsverfahren, in den gekalkten Rohsaft zurückgeführt. Der erhaltene aufkonzentrierte Dünnschlamm besteht aus der Nichtsaccharosestoff-haltigen Fraktion.

Der von Nichtsaccharosestoff-haltiger Fraktion abgetrennte gekalkte Rohsaft wird am Ausgang des Dekanteurs als klarer beziehungsweise geklärter Rohsaft erhalten. Der geklärte Rohsaft wird durch einen weiteren Wärmetauscher geführt und dabei auf eine Temperatur von etwa 85°C erhitzt. Der erhitzte geklärte Rohsaft wird in einen dritten Alkalisierungsbehälter, den Hauptkalkungsbehälter überführt und dort einer heißen zweiten Hauptkalkung unterzogen. Dabei wird eine Alkalität von 0,4 g CaO/100 ml eingestellt. Die Temperatur bei der heißen Hauptkalkung beträgt etwa 85°C.

Der aus der zweiten Hauptkalkung austretende Hauptkalkungssaft wird anschließend einer ersten Carbonatation mit anschließender erster Filtration und einer nachgeschalteten zweiten Carbonatation mit anschließender zweiter Filtration unterworfen. Die Carbonatation wird durchgeführt, indem Kohlenstoffdioxidgas in den Hauptkalkungssaft geleitet wird, wodurch der in der Hauptkalkung nicht verbrauchte Kalk als Calciumcarbonat ausfällt.

Das ausgefällte Calciumcarbonat wird nach der ersten Carbonatation in der ersten Filtration beziehungsweise nach der zweiten Carbonatation in der zweiten Filtration aus dem geklärten Rohsaft entfernt, sodass ein geklärter aufgereinigter Rohsaft erhalten wird. Das in der ersten und zweiten Filtration enthaltene Retentat wird in einem Schlammbehälter gesammelt und anschließend über eine Carbokalkpresse entwässert.

### 1.3. Ergebnisse

Bei der Durchführung dieses Verfahrens zeigt sich im Vergleich zu bekannten Kalk-Kohlensäure-Extraktreinigungsverfahren, dass:
- der Gesamtkalkverbrauch um mehr als 40 % bei gleich bleibender Qualität des erhaltenen Dünnsaftes reduziert ist,
- der Koksverbrauch und die Kohlenstoffdioxid Emissionen der Kalköfen signifikant reduziert sind,
- die Kalköfen entlastet werden, wodurch der Wirkungsgrad erhöht und die Belastung der Ausmauerung vermindert wird.

Es kommt bei Entlastung der ersten Filtration zu einer Verlängerung der Filterstandzeiten der ersten beziehungsweise zweiten Carbonatation nachgeschalteten Filter.

Die abgetrennte Fraktion von Nichtsaccharosestoffen kann als betrieblicher Hilfsstoff für die Schnitzeltrocknungsanlage zur Reduzierung der TOC und SO₂-Emission und dem Energieverbrauch in der Schnitzeltrocknungsanlage eingesetzt werden.

Das Verfahren arbeitet so effektiv, dass auch alterierte Rüben eingesetzt werden können; dadurch kann die Kampagnezeit verlängert werden.

Die Schlammsaftkonzentrat- sowie die Carbokalkmenge wird reduziert; dadurch werden die Carbokalkpressen entlastet. Es entsteht Carbokalk mit einem Trockensubstanzgehalt von etwa 70% und einem Zuckergehalt von etwa 0,7 %.

### Beispiel 2 Herstellung eines Flockungshilfsmittels auf Basis von Stärke

Das Flockungshilfsmittel ist eine grob vermahlene, hochcarboxymethylierte Kartoffelstärke. Die Carboxymethylierung wird im Kleister mit Natriummonochloracetat (NaClOAc: Cl-CH₂-COO⁻ Na⁺) unter alkalischen Bedingungen durchgeführt. Die Carboxymethylierung wird in zwei Reaktionsschritten durchgeführt, womit auch eine bessere Umsetzung erreicht werden kann.

Die Kartoffelstärke wird mit Deionat zu einem 35%igen Slurry mit der ersten Menge an Natriummonochloracetat angerührt und im Reaktor mit 50%iger NaOH, verkleistert. Nach der Erhöhung der Temperatur auf 65°C wird das Reaktionsgemisch 1h reagieren gelassen. Dann erfolgt die Zugabe der 2.Menge an NaClAc, in Wasser vorgelöst, und der zweiten Natronlaugemenge. Nach einer weiteren Stunde Reaktionszeit wird der erhaltene Kleister walzengetrocknet und der Stärkefilm zermahlen. Da die NaOH bei der Reaktion verbraucht wird und zur Gewährleistung des alkalischen Milieus wird jeweils mit einem geringen molaren Überschuss an NaOH (1,07fache Menge) gearbeitet.

Das Produkt weist in 10%iger Einrührung eine Viskosität von 1000-2500mPa.s auf, der pH-Wert beträgt etwa 10-11,5. Der reale Substitutionsgrad (DS) beträgt von 0,6 bis 0,7.

## Patentansprüche

1. Verfahren zur Reinigung von Zuckerrüben-Rohsaft, enthaltend die Schritte:
(a) Vorkalken des Rohsafts;
(b) kaltes Hauptkalken bei einer Temperatur von weniger als 75 °C;
(c) Klären des Rohsafts in einer Abtrennvorrichtung bei einer Temperatur von 75 °C oder mehr, wobei die Nichtsaccharosestoff-Fraktion vom gekalkten Rohsaft abgetrennt wird.
(d) heißes Hauptkalken bei einer Temperatur von 75 °C oder mehr.

2. Verfahren nach Anspruch 1, wobei in Schritt (a) die Vorkalkung durch Zugabe von Kalkmilch bis zu einer Konzentration von 0,1 bis 0,3 g CaO/100 ml erfolgt.

3. Verfahren nach einem der vorstehenden Ansprüche, wobei in Schritt (b) die kalte Hauptkalkung durch Zugabe von Kalkmilch bis zu einer Konzentration von 0,3 bis 0,5 g CaO/100 ml erfolgt.

4. Verfahren nach einem der vorstehenden Ansprüche, wobei in Schritt (c) die Verweilzeit des gekalkten Rohsafts in der ersten Abtrennvorrichtung 40 min oder mehr beträgt.

5. Verfahren nach einem der vorstehenden Ansprüche, wobei in Schritt (a) die Vorkalkung bei einer Temperatur von weniger als 7.5°C erfolgt.

6. Verfahren nach einem der vorstehenden Ansprüche, wobei in Schritt (c) das Klären des gekalkten Rohsafts bei einer Temperatur von 75°C oder mehr erfolgt.

7. Verfahren nach einem der vorstehenden Ansprüche, wobei in Schritt (a) die Vorkalkung in einem ersten Alkalisierungsbehälter und in Schritt (b) die kalte Hauptkalkung in einem nachgeschalteten zweiten Alkalisierungsbehälter erfolgt.

8. Verfahren nach einem der vorstehenden Ansprüche, wobei nach der kalten Hauptkalkung in Schritt (b) und vor dem Klären des gekalkten Rohsafts in Schritt (c) mindestens ein Flockungshilfsmittel bis zu einer Konzentration von 1 bis 8 ppm zugegeben wird.

9. Verfahren nach Anspruch 8, wobei das Flockungshilfsmittel ein Copolymer, enthaltend Acrylamid und Natriumacrylat, ist und eine Molmasse von durchschnittlich 5x10⁶ bis 22x10⁶ g/mol aufweist.

10. Verfahren nach Anspruch 8, wobei das Flockungshilfsmittel ausgewählt ist aus Carboxymethylcellulose, Carboxymethylstärke und Gemischen davon.

11. Verfahren nach einem der vorstehenden Ansprüche, wobei die Abtrennvorrichtung ein statischer oder dynamischer Dekanter ist.

12. Verfahren nach einem der vorstehenden Ansprüche, wobei die abgetrennte Nichtsaccharosestoffe-Fraktion als Dünnschlamm in mindestens einem weiteren Schritt in einer weiteren Abtrennvorrichtung durch Abtrennen einer Saccharose-Fraktion weiter aufkonzentriert wird.

13. Verfahren nach Anspruch 12, wobei die weitere Abtrennvorrichtung mindestens eine Dekanterzentrifuge enthält.

14. Verfahren nach einem der Ansprüche 12 oder 13, wobei die erhaltene Saccharose-Fraktion als Klarsaft und/oder Absüßsaft in die Abtrennvorrichtung von Schritt (c) zurückgeführt wird.

15. Verfahren, nach Anspruch 14, wobei in Schritt (d) die Hauptkalkung durch Zugabe von Kalkmilch bis zu einer Konzentration von 0,4 bis 0,7 g CaO/100 ml erfolgt.

16. Verfahren nach einem der vorstehenden Ansprüche, wobei im Anschluss an Schritt (d) in einem weiteren Schritt (e) mindestens eine Carbonatation durch Einleiten von Kohlenstoffdioxid in den Hauptkalkungssaft und anschließende Filtration des entstehenden Schlamms erfolgt, so dass klarer Saccharosesirup erhalten wird.

17. Verfahren nach Anspruch 16 wobei Schritt (e) eine erste Carbonatation und Filtration und eine anschließende zweite Carbonation und Filtration umfasst.

18. Verfahren zur Herstellung von Saccharosesirup aus Zuckerrüben-Rohsaft, enthaltend:
Bereitstellen von Zuckerrüben-Rohsaft;
Durchführen des Reinigungsverfahrens nach einem der Ansprüche 1 bis 17; und
Erhalten eines von Nichtsaccharosestoffen befreiten Saccharosesirups.

19. Verfahren zur Isolierung einer Zusammensetzung von Nichtsaccharosestoffen aus Zuckerrüben-Rohsaft, enthaltend:
Bereitstellen von Zuckerrüben-Rohsaft;
Durchführen des Verfahrens nach einem der Ansprüche 1 bis 15; und
Erhalten der abgetrennten Nichtsaccharosestoff-haltigen Zusammensetzung.

20. Verfahren zur Herstellung von Carbokalk aus Zuckerrüben-Rohsaft und Kalkmilch, enthaltend:
Bereitstellen von Zuckerrüben-Rohsaft;
Durchführen des Verfahrens nach Anspruch 16 oder 17;
Entwässern des in Schritt (e) bei der Carbonatation und Filtration erhaltenen Schlamms; und
Erhalten von Carbokalk.

21. Vorrichtung, enthaltend:
erster Alkalisierungsbehälter (10) zur Vorkalkung, wobei der erste Alkalisierungsbehälter einen Zulauf (11) für den Rohsaft,
eine Einrichtung (12) für die Dosierung von Kalkmilch und einen Ablauf (13) für den Vorkalkungssaft aufweist;
zweiter Alkalisierungsbehälter (20) zu ersten Hauptkalkung,
wobei der zweite Alkalisierungsbehälter einen Zulauf (21) für den Vorkalkungssaft, eine Einrichtung (22) für die Dosierung von Kalkmilch und einen Ablauf (23) für den gekalkten Rohsaft aufweist und wobei der Zulauf (21) mit dem Ablauf (13) des ersten Alkalisierungsbehälters in Verbindung steht;
Wärmetauscher (50) zum Aufheizen des gekalkten Rohsafts,
wobei der Wärmetauscher einen Zulauf (51) für den gekalkten Rohsaft und einen Ablauf (52) für den aufgeheizten gekalkten Rohsaft aufweist und wobei der Zulauf (51) mit dem Ablauf (23) des zweiten Alkalisierungsbehälters (20) in Verbindung, steht und der Ablauf (52) mit dem Zulauf (31) der Abtrennvorrichung (30) in Verbindung steht; und
Abtrennvorrichtung (30) zur Klärung des gekalkten Rohsafts und Abtrennung einer Nichtsaccharosestoff-haltigen Fraktion,
wobei die erste Abtrennvorrichtung einen Zulauf (31) für den gekalkten Rohsaft, einen Ablauf (32) für die Nichtsaccharosestoff-haltige Fraktion und einen Ablauf (33) für den klaren gekalkten Rohsaft aufweist und wobei der Zulauf (31) mit dem Ablauf (23) des zweiten Alkalisierungsbehälters in Verbindung steht.

22. Vorrichtung nach Anspruch 21, wobei die Abtrennvorrichtung (30) ein statischer oder dynamischer Dekanter ist.

23. Vorrichtung nach einem der Ansprüche 21 bis 22, enthaltend:
zweite oder weitere Abtrennvorrichtung (70) zur weiteren Aufkonzentrierung der Nichtsaccharosestoff-haltigen Fraktion und Abtrennung einer Saccharose-haltigen Fraktion, wobei die zweite oder weitere Abtrennvorrichtung einen Zulauf (71) für die Nichtsaccharosestoff-haltige Fraktion, einen Ablauf (72) für die aufkonzentrierte Nichtsaccharosestoff-haltige Fraktion und einen Ablauf (73) für die klare Saccharose-haltige Fraktion aufweist und wobei der Zulauf (71) mit dem Ablauf (32) der Abtrennvorrichtung (30) in Verbindung steht.

24. Vorrichtung nach einem der Ansprüche 21 bis 23, enthaltend:
dritter Alkalisierungsbehälter (40) zur zweiten Hauptkalkung,
wobei der dritte Alkalisierungsbehälter einen Zulauf (41) für den klaren gekalkten Rohsaft, eine Einrichtung (42) für die Dosierung von Kalkmilch und einen Ablauf (43) für den gekalkten Rohsaft aufweist und wobei der Zulauf (41) mit dem Ablauf (33) der Abtrennvorrichtung (30) in Verbindung steht.

25. Vorrichtung nach Anspruch 24, enthaltend:
Wärmetauscher (60) zum Aufheizen des geklärten gekalkten Rohsafts vor der zweiten Hauptkalkung, wobei der Wärmetauscher einen Zulauf (61) für den geklärten gekalkten Rohsaft und einen Ablauf (62) für den aufgeheizten geklärten gekalkten Rohsaft aufweist und wobei der Zulauf (61) mit dem Ablauf (33) der Abtrennvorrichtung (30) in Verbindung steht und der Ablauf (62) mit dem Zulauf (41) des dritten Alkalisierungsbehälters (40) in Verbindung steht.

## Claims

1. Method for the purification of crude sugar beet juice, containing the steps:
(a) preliming of the crude juice;
(b) cold mainliming at a temperature lower than 75°C;
(c) clarification of the crude juice in a separation device at a temperature of 75°C or higher, wherein the non-sucrose substance fraction is separated from the limed crude juice,
(d) hot mainliming at a temperature of 75°C or higher.

2. Method according to claim 1, wherein, in step (a), the preliming is carried out by the addition of lime milk up to a concentration of 0.1 to 0.3 g CaO/100 mL.

3. Method according to any one of the preceding claims, wherein, in step (b), the cold mainliming is carried out by the addition of lime milk up to a concentration of 0.3 to 0.5 g CaO/100 mL.

4. Method according to any one of the preceding claims, wherein, in step (c), the residence time of the limed crude juice in the first separation device is 40 min or more.

5. Method according to any one of the preceding claims, wherein, in step (a), the preliming is carried out at a temperature lower than 75°C.

6. Method according to any one of the preceding claims, wherein, in step (c), the clarification of the limed crude juice is carried out at a temperature of 75°C or higher.

7. Method according to any one of the preceding claims, wherein, in step (a), the preliming is carried out in a first alkalinization container and, in step (b), the cold mainliming is carried out in a downstream second alkalinization container.

8. Method according to any one of the preceding claims, wherein, after the cold mainliming in step (b) and before the clarification of the limed crude juice in step (c), at least one flocculation agent is added up to a concentration of 1 to 8 ppm.

9. Method according to claim 8, wherein the flocculation agent is a copolymer containing acrylamide and sodium acrylate, and presents an average molecular weight of 5 x 10⁶ to 22 x 10⁶ g/mol.

10. Method according to claim 8, wherein the flocculation agent is selected from carboxymethylcellulose, carboxymethyl starch, and mixtures thereof.

11. Method according to any one of the preceding claims, wherein the separation device is a static or dynamic decanter.

12. Method according to any one of the preceding claims, wherein the separated non-sucrose substance fraction as a thin sludge is further concentrated in at least one additional step in an additional separation device by the separation of a sucrose fraction.

13. Method according to claim 12, wherein the additional separation device contains at least one decanter centrifuge.

14. Method according to any one of claims 12 or 13, wherein the sucrose fraction obtained is returned as clear juice and/or sweetened juice into the separation device of step (c).

15. Method according to claim 14, wherein, in step (d), the mainliming is carried out by the addition of lime milk up to a concentration of 0.4 to 0.7 g CaO/100 mL.

16. Method according to any one of the preceding claims, wherein, following step (d), in an additional step (e), at least one carbonation occurs by introducing carbon dioxide into the mainliming juice and subsequent filtration of the sludge produced, so that a clear sucrose syrup is obtained.

17. Method according to claim 16, wherein step (e) comprises a first carbonation and filtration, and a subsequent second carbonation and filtration.

18. Method for the manufacture of sucrose syrup from crude sugar beet juice, comprising:
providing of crude sugar beet juice;
carrying out the purification method according to any one of claims 1 to 17; and
obtaining a sucrose syrup from which non-sucrose substances have been removed.

19. Method for the isolation of a combination of non-sucrose substances from crude sugar beet juice, comprising:
providing of crude sugar beet juice;
carrying out the method according to any one of claims 1 to 15; and
obtaining the separated non-sucrose substance containing combination.

20. Method for the manufacture of a carbonated lime from crude sugar beet juice and lime milk, comprising:
providing of crude sugar beet juice;
carrying out the method according to claim 16 or 17;
dewatering the sludge obtained in step (e) in the carbonation and
filtration; and
obtaining of carbonated lime.

21. Device, comprising:
a first alkalinization container (10) for preliming, wherein the first alkalinization container presents an inlet (11) for the crude juice, a device (12) for the metering of lime milk, and an outlet (13) for the preliming juice;
a second alkalinization container (20) for the first mainliming, wherein the second alkalinization container presents an inlet (21) for the preliming juice, a device (22) for the metering of lime milk, and an outlet (23) for the limed crude juice, and wherein the inlet (21) connects to the outlet (13) of the first alkalinization container;
a heat exchanger (50) for heating the limed crude juice, wherein the heat exchanger presents an inlet (51) for the limed crude juice and an outlet (52) for the heated limed crude juice, and wherein the inlet (51) connects to the outlet (23) of the second alkalinization container (20), and the outlet (52) connects to the inlet (31) of the separation device (30); and
a separation device (30) for clarification of the limed crude juice and separation of a non-sucrose substance containing fraction, wherein the first separation device presents an inlet (31) for the limed crude juice, an outlet (32) for the non-sucrose substance containing fraction, and an outlet (33) for the clear limed crude juice, and wherein the inlet (31) connects to the outlet (23) of the second alkalinization container.

22. Device according to claim 21, wherein the separation device (30) is a static or dynamic decanter.

23. Device according to any one of claims 21 to 22, comprising:
a second or additional separation device (70) for the further concentration of the non-sucrose substance-containing fraction and separation of a sucrose-containing fraction, wherein the second or additional separation device presents an inlet (71) for the non-sucrose substance containing fraction, an outlet (72) for the concentrated non-sucrose substance containing fraction, and an outlet (73) for the clear sucrose-containing fraction, and wherein the inlet (71) connects to the outlet (32) of the separation device (30).

24. Device according to any one of claims 21 to 23, comprising:
a third alkalinization container (40) for the second mainliming, wherein the third alkalinization container presents an inlet (41) for the clear limed crude juice, a device (42) for the metering of lime milk and an outlet (43) for the limed crude juice, and wherein the inlet (41) connects to the outlet (33) of the separation device.

25. Device according to claim 24, comprising:
a heat exchanger (60) for heating the clarified limed crude juice before the second mainliming, wherein the heat exchanger presents an inlet (61) for the clarified limed crude juice and an outlet (62) for the heated clarified limed crude juice, and wherein the inlet (61) connects to the outlet (33) of the separation device (30), and the outlet (62) connects to the inlet (41) of the third alkalinization container (40).

## Revendications

1. Procédé pour la purification du jus brut de betteraves à sucre, le procédé comprenant les étapes suivantes :
(a) préchaulage du jus brut ;
(b) chaulage principal à froid à une température inférieure à 75 °C ;
(c) épuration du jus brut dans un dispositif de séparation à une température de 75 °C ou plus, dans laquelle la fraction contenant des substances non-saccharose est séparée du jus brut chaulé ;
(d) chaulage principal à chaud à une température de 75 °C ou plus.

2. Procédé selon la revendication 1, dans lequel le préchaulage dans l'étape (a) s'effectue par addition du lait de chaux jusqu'à une concentration de 0,1 à 0,3 g CaO/100 ml.

3. Procédé selon l'une quelconque des revendications précédentes, dans lequel le chaulage principal à froid dans l'étape (b) s'effectue par l'addition du lait de chaux jusqu'à une concentration de 0,3 à 0,5 g CaO/100 ml.

4. Procédé selon l'une quelconque des revendications précédentes, dans lequel le temps de séjours du jus brut chaulé dans l'étape (c) dans le premier dispositif de séparation est 40 min ou plus.

5. Procédé selon l'une quelconque des revendications précédentes, dans lequel le préchaulage dans l'étape (a) s'effectue à une température inférieure à 75 ° C.

6. Procédé selon l'une quelconque des revendications précédentes, dans lequel l'épuration du jus brut chaulé dans l'étape (c) s'effectue à une température de 75 ° C ou plus.

7. Procédé selon l'une quelconque des revendications précédentes, dans lequel le préchaulage dans l'étape (a) s'effectue dans un premier bac d'alcalinisation, et le chaulage principal à froid dans l'étape (b) dans un second bac d'alcalinisation en aval.

8. Procédé selon l'une quelconque des revendications précédentes, dans lequel au moins un adjuvant de floculation est ajouté, jusqu'à une concentration de 1 à 8 ppm, après le chaulage principal à froid dans l'étape (b) et avant l'épuration du jus brut chaulé dans l'étape (c).

9. Procédé selon la revendication 8, dans lequel l'adjuvant de floculation est un copolymère contenant de l'acrylamide et de l'acrylate de sodium et présentant une masse molaire de 5x10⁶ à 22x10⁶ g/mol en moyenne.

10. Procédé selon la revendication 8, dans lequel l'adjuvant de floculation est sélectionné en la carboxyméthylcellulose, le carboxyméthylamidon et les mélanges de ceux-ci.

11. Procédé selon l'une quelconque des revendications précédentes, dans lequel le dispositif de séparation est un décanteur statique ou dynamique.

12. Procédé selon l'une quelconque des revendications précédentes, dans lequel la fraction separée contenant des substances non-saccharose sous forme de boue fluide est ultérieurement concentrée, dans au moins une autre étape, par séparation d'une fraction de saccharose dans un autre dispositif de séparation.

13. Procédé selon la revendication 12, dans lequel l'autre dispositif de séparation comprend au moins une centrifugeuse à décanteur.

14. Procédé selon l'une quelconque des revendications 12 ou 13, dans lequel la fraction de saccharose obtenue est recyclée dans le dispositif de séparation de l'étape (c) en tant que jus clair et/ou jus sucré.

15. Procédé selon la revendication 14, dans lequel le chaulage principal dans l'étape (d) s'effectue par addition du lait de chaux jusqu'à une concentration de 0,4 à 0,7 g CaO/100 ml.

16. Procédé selon l'une quelconque des revendications précédentes, dans lequel, dans une autre étape (e) suivant l'étape (d), s'effectue au moins une carbonatation par introduction de dioxyde de carbone dans le jus du chaulage principal et une filtration suivante de la boue résultante pour obtenir un sirop clair de saccharose.

17. Procédé selon la revendication 16, dans lequel l'étape (e) comprend une première carbonatation et filtration et puis une seconde carbonatation et filtration suivante.

18. Procédé pour la fabrication du sirop de saccharose à partir du jus brut de betteraves à sucre, le procédé comprenant les étapes :
fournissage du jus brut de betteraves à sucre ;
mis en oeuvre du procédé de purification selon l'une quelconque des revendications 1 à 17 ; et
obtention d'un sirop de saccharose exempt des substances non-saccharose.

19. Procédé pour l'isolation d'une composition des substances non-saccharose à partir du jus brut de betteraves à sucre, le procédé comprenant les étapes :
fournissage du jus brut de betteraves à sucre ;
mis en oeuvre du procédé selon l'une quelconque des revendications 1 à 15 ; et
obtention de la composition séparée contenant des substances non-saccharose.

20. Procédé pour la fabrication de la chaux résiduaire à partir du jus brut de betteraves à sucre et lait de chaux, le procédé comprenant les étapes :
fournissage du jus brut de betteraves à sucre ;
mis en oeuvre du procédé selon la revendication 16 ou 17 ;
déshydratation de la boue obtenue lors de la carbonatation et filtration dans l'étape (e) ; et
obtention de la chaux résiduaire.

21. Dispositif comprenant :
un premier bac d'alcalinisation (10) pour le préchaulage, le premier bac d'alcalinisation présentant une entrée (11) pour le jus brut, un moyen (12) pour la dosage du lait de chaux et une sortie (13) pour le jus de préchaulage ;
un second bac d'alcalinisation (20) pour le premier chaulage principale, le second bac d'alcalinisation présentant une entrée (21) pour le jus de préchaulage, un moyen (22) pour la dosage du lait de chaux et une sortie (23) pour le jus brut chaulé, et l'entrée (21) étant en liaison avec la sortie (13) du premier bac d'alcalinisation ;
un échangeur de chaleur (50) pour la chauffage du jus brut chaulé, l'échangeur de chaleur présentant une entrée (51) pour le jus brut chaulé et une sortie (52) pour le jus brut chaulé chauffé, et l'entrée (51) étant en liaison avec la sortie (23) du second bac d'alcalinisation (20) et la sortie (52) étant en liaison avec l'entrée (31) du dispositif de séparation (30) ; et
un dispositif de séparation (30) pour l'épuration du jus brut chaulé et pour la séparation d'une fraction contenant des substances non-saccharose, le premier dispositif de séparation présentant une entrée (31) pour le jus brut chaulé, une sortie (32) pour la fraction contenant des substances non-saccharose et une sortie (33) pour le jus brut chaulé clair, l'entrée (31) étant en liaison avec la sortie (23) du second bac d'alcalinisation.

22. Dispositif selon la revendication 21, dans lequel le dispositif de séparation (30) est un décanteur statique ou dynamique.

23. Dispositif selon l'une quelconque des revendications 21 à 22, comprenant :
un second ou un autre dispositif de séparation (70) pour la concentration ultérieure de la fraction contenant des substances non-saccharose et la séparation d'une fraction contenant de la saccharose, le second ou l'autre dispositif de séparation présentant une entrée (71) pour la fraction contenant des substances non-saccharose, une sortie (72) pour la fraction concentrée contenant des substances non-saccharose et une sortie (73) pour la fraction claire contenant de la saccharose, et l'entrée (71) étant en liaison avec la sortie (32) du dispositif de séparation (30).

24. Dispositif selon l'une quelconque des revendications 21 à 23, comprenant :
un troisième bac d'alcalinisation (40) pour le second chaulage principal, le troisième bac d'alcalinisation présentant une entrée (41) pour le jus brut chaulé clair, un moyen (42) pour la dosage du lait de chaux et une sortie (43) pour le jus brut chaulé, et l'entrée (41) étant en liaison avec la sortie (33) du dispositif de séparation (30) ;

25. Dispositif selon la revendication 24, comprenant :
un échangeur de chaleur (60) pour la chauffage du jus brut chaulé et épuré avant le second chaulage principal, l'échangeur de chaleur présentant une entrée (61) pour le jus brut chaulé et épuré et une sortie (62) pour le jus brut chaulé, chauffé et épuré, et l'entrée (61) étant en liaison avec la sortie (33) du dispositif de séparation (30), et la sortie (62) étant en liaison avec l'entrée (41) du troisième bac d'alcalinisation (40).
